# EUROPEAN PATENT SPECIFICATION

(11) **EP 3 727 963 B1**
(45) Date of publication and mention of the grant of the patent: **14.02.2024**
(21) Application number: 18785896.4
(22) Date of filing: 04.10.2018
(51) Int. Cl.: B60T 8/17, B60T 8/88

(54) **HUB DEVICE FOR USE IN A VEHICLE BRAKING SYSTEM**
HUB-VORRICHTUNG FÜR EIN BREMSSYSTEM EINES FAHRZEUGS
DISPOSITIF CONCENTRATEUR POUR UN SYSTÈME DE FREINAGE DE VÉHICULE

(30) Priority: 20.12.2017 GB 201721492
(43) Date of publication of application: 28.10.2020
(73) Proprietor: Haldex Brake Products AB, 26124 Landskrona (SE)
(72) Inventor: HARRISON, Dudley John, Shirley Solihull West Midlands B90 4YP (GB); RAVAZZOLO, Joel, Nuneaton Warwickshire CV11 5JF (GB)
(74) Representative: Forresters IP LLP
(86) International application number: PCT/EP2018/077036
(87) International publication number: WO 2019/120660

(56) References cited:
- EP-A1- 2 658 181
- EP-A2- 1 085 691
- WO-A1-2014/012609
- AU-B2- 2013 219 219
- DE-A1-102009 008 342
- GB-A- 2 462 072
- US-A1- 2003 195 668
- US-A1- 2010 241 295

## Description

This invention relates to a vehicle braking system, in particular, a vehicle braking system for a vehicle including a tractor and one or more trailers.

In vehicles including a tractor (i.e. a towing vehicle) and a trailer and/or semi-trailer, where braking is controlled by an electronic braking system (EBS), it is known to provide the tractor with an electronic control unit (ECU) to control braking of the tractor and the trailer with a separate ECU to control braking of the trailer. An electronic braking demand signal generated by a driver of the vehicle, for example by actuating a foot brake pedal, is transmitted to the tractor ECU, which determines the required braking force, and transmits the appropriate braking signals to brake actuators provided for the wheels of the tractor. The tractor ECU also transmits the braking demand signal to the trailer ECU to enable the trailer ECU to transmit appropriate braking signals to the brake actuators provided for the wheels of the trailer.

An EBS of known type may be used in conjunction with tractors having interfaces conforming to ECE Regulation 13, e.g. having one pneumatic supply line and one pneumatic control line; one pneumatic supply line, one pneumatic control line and one electric control line; or one pneumatic supply line and one electric control line. The latter configuration is not currently permitted, but EBS systems which support this configuration are known (for example the Haldex Brake Products EB+ system). The electric control line is both the electrical power and data communication connection between the tractor and the trailer(s).

EP2658181 discloses a connection device for communication between two vehicles, the connection device comprising a data line and two plug connections. A data splitter is provided between the data line and the plug connections. The two plug connections are assigned different conduction paths. The data splitter checks the plugged in plug connection and activates the assigned conduction path. One of the conduction paths is activated when both plug connections are used.

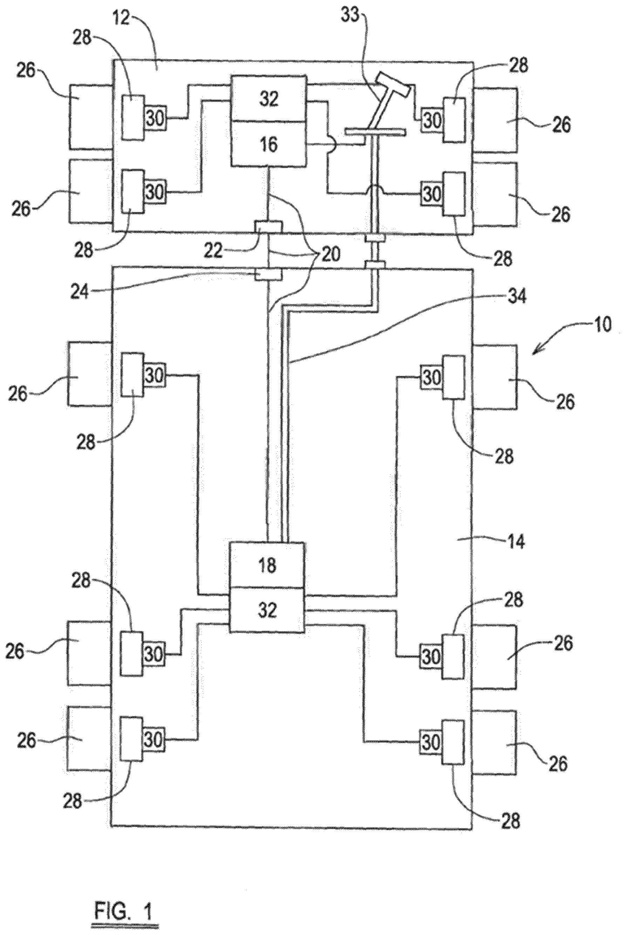

A typical electronic braking system is illustrated in Figure 1. An articulated vehicle 10 is fitted with an electronic braking system (EBS). The vehicle 10 includes a tractor 12 and a trailer 14, the tractor 12 having a main braking electronic control unit (ECU) 16 and the trailer 14 having a main braking electronic control unit (ECU) 18, the two ECUs being connected together by means of a CAN bus 20 and a tractor connector 22 mounted on the rear of the tractor 12 and a trailer connector 24 mounted on the front of the trailer 14. The tractor 12 and trailer 14 are each provided with a plurality of wheels 26 each of which is provided with a brake 28 which is operated by an actuator 30. In this example, the actuators 30 are pneumatically operable, and are therefore connected to a source of pressurised fluid (in this example compressed air) via a modulator 32. Each modulator 32 is electrically operable and receives an electrical signal input from one of the ECUs 16, 18 so that it may control the flow of compressed air to the brake actuators associated with the wheels 26 at of the tractor 12 or trailer 14, respectively, in response to an electrical braking signal from the respective ECU 16, 18.

The CAN bus 20 is ISO11992 compliant and the two connectors 22, 24 are standard tractor-trailer connectors which, in this example, fall within the scope of ISO7638. As such, the portion of the CAN bus 20 which extends between the tractor ECU 16 and the tractor-mounted connector 22 is no more than 15m long, the portion of the CAN bus 20 which extends between the tractor-mounted connector 22 and the trailer-mounted connector 24 is no more than 7m long, whilst the portion of the CAN bus 20 which extends between the trailer connector 24 and the trailer ECU 18 is no more than 18m long.

The system is also provided with a pneumatic back-up to enable braking of the trailer 14 in the absence of an electrical braking demand signal from the tractor 12, for example because of an electrical power failure in the tractor 12, because there is a fault in the CAN bus 20 or the connectors 22, 24, or because the tractor EBS is incompatible with the trailer EBS. Operation of the brake pedal also generates a pneumatic braking demand signal which is transmitted along a pneumatic line 34 from the tractor to a pressure input in the trailer ECU 18. The trailer ECU 18 is provided with a pressure transducer which measures the pressure of the pneumatic braking demand signal, and converts it to an electrical braking demand signal, which it then uses to generate appropriate braking signals for transmission to the modulator 32 of the trailer 14.

It is known to provide repeaters and routers (described in more detail below) to enable longer distances to be covered by the CAN bus. Such repeaters and routers provide for different situations, and have different functions. Each repeater or router has a number of connectors for connecting the device to the other components of the EBS. The properties and functions of each repeater or router device and its respective connectors are permanently configured and arranged prior to installation of the device in the vehicle EBS. Furthermore, the pinouts and keying of the connectors may be identical for each port. This presents a problem that during installation and/or servicing, some or all of the cables could be connected or reconnected to an incorrect port. The ports may be labelled, either permanently on the exterior of the device, or by means of labels attached to the device. However, this does not prevent labels being damaged/erased or the possibility of a label being misread or disregarded.

The present invention is defined in independent claim 1 and relates to a hub device for use in a vehicle braking system which includes an electronic braking system and a CAN bus.

Preferred embodiments of the invention are defined in the dependent claims.

In accordance with embodiments of the present invention, there is provided a vehicle braking system for a vehicle including a tractor and at least one trailer, the vehicle braking system including an electronic braking system including a respective electronic control unit for the tractor and the or each trailer, a CAN bus to enable communication between the electronic control units of the tractor and the or each trailer, and a hub device which is able to communicate electrical signals, including a braking demand signal, to components of the electronic braking system, and to function as at least one of a CAN bus repeater and a CAN bus router, wherein the hub device is operable to determine its required function based upon signals received by the hub device from the electronic control unit of the trailer with which the hub device is associated, and one or more of the electronic control units of the tractor and the or each other trailer, where one or more additional trailers is provided.

The hub device may include a plurality of connectors, and the hub device may be operable to configure each of its connectors dependent upon one or more signals received by each connector, and/or a lack of a signal received by one or more of the connectors.

The hub device may be operable to configure its connectors during an end-of-line procedure.

The hub device may be operable to configure its connectors during operation of the braking system, and/or during or after maintenance of the braking system.

Where there are multiple trailers, each trailer of the vehicle may include an associated hub device.

Each trailer except the final trailer in a train may include a hub device.

The vehicle braking system may include a plurality of hub devices, wherein communication between the electronic control units of the tractor and/or the or each trailer, is carried out via one or more of the hub devices.

There is also provided a hub device for use in a vehicle braking system which includes an electronic braking system and a CAN bus, the hub device including a plurality of connectors, wherein the hub device is operable to configure a function of one or more of the connectors based upon a signal received by or the lack of a signal received by one or more of the connectors.

The hub device may be operable to determine its required function as either a CAN bus repeater or a CAN bus router based upon based upon signals received by the hub device from the electronic control unit of a trailer with which the hub device is associated, and one or more electronic control units associated with a tractor of the vehicle and/or one or more other trailers, where one or more additional trailers is provided.

There is also provided a vehicle including a braking system as described herein.

There is also provided a vehicle including a hub device as described herein.

Embodiments of the invention will now be described, by way of example only, with reference to the accompanying drawings, of which
FIGURE 1 is a schematic illustration of a prior art vehicle braking system;
FIGURE 2 is a schematic illustration of a vehicle braking system including a repeater device;
Figure 3 is a schematic illustration of a vehicle braking system including a router device;
FIGURE 4 is a schematic illustration of a hub device in accordance with the present invention; and
FIGURE 5 is a table showing possible connections made to a hub device and outcomes of such connections.

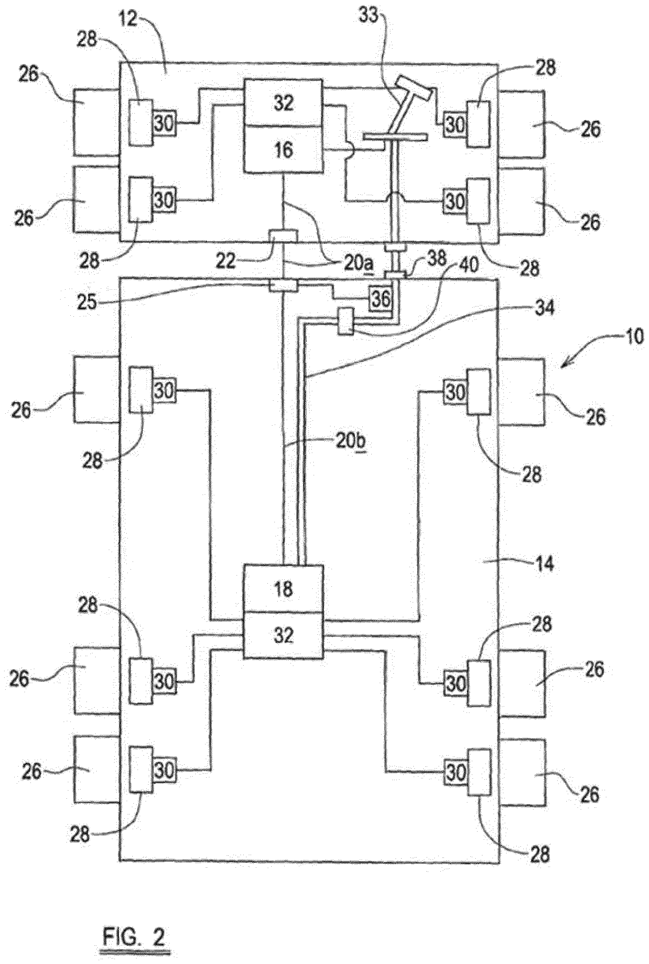

Referring to Figure 2, there is shown a schematic illustration of a vehicle 10 having a braking system similar to that shown in Figure 1. Identical parts have identical reference numerals. In Figure 2, the trailer-mounted connector 24 has been replaced by a CAN hub 25 rather than a conventional ISO7638 connector (which acts as a straightforward junction box).

In an embodiment, the CAN hub 25 acts as a repeater and retransmits any signals it receives. Since the CAN hub repeater 25 is therefore the originator of any signal that it transmits, the system is now considered to be provided with two CAN buses - the first 20a extending between the tractor ECU 16 and the CAN hub 25 and the second 20b extending between the CAN hub 25 and the trailer ECU - both of which can be up to 40 metres long. By virtue of the replacement of the trailer connector 24 with the CAN hub 25, electrical control of braking can be maintained even if the system is used on a trailer where long control lines are required, for example an extendable trailer which is fully extended. The CAN hub repeater 25 receives all seven cores from the tractor connector 22, including the ISO11992 data communication part of the electrical control line, acts as an intermediate CAN node and then connects to the trailer ECU 18 via a seven-core cable of up to 40 metres.

Whilst the connector 24 is described above as being replaced by the CAN hub repeater 25, the CAN hub repeater 25 may be provided in addition to the connector 24.

The trailer 14 is also provided with a headboard pressure sensor 36 which measures the pressure in the pneumatic line 34 as close to the front of the trailer (the trailer headboard) as possible. In this example, the headboard pressure sensor 36 is mounted in the pneumatic line 34 between a trailer coupling 38, by means of which the pneumatic line from the tractor 12 is coupled to the trailer 14, and a relay valve 40 which acts to boost the braking demand signal transmitted to the trailer ECU 18. The headboard pressure sensor 36 generates an electrical signal which is indicative of the pressure in the pneumatic line 34, and which therefore constitutes a replacement electrical braking demand signal. The headboard pressure sensor 36 is connected to an electrical input of the CAN hub 25 and the CAN hub 25 is configured such that the replacement electrical braking demand signal from the pressure sensor 36 can be transmitted to the trailer ECU 18 via the second CAN bus 20b.

The trailer ECU 18 can then treat the electrical braking demand signal generated by the headboard pressure sensor 36 as if it were an electrical braking demand signal transmitted from the tractor 12, and generate the braking signals for transmission to the modulators 32 on the basis of this electrical braking demand signal rather than on the basis of the electrical signal derived from the pneumatic braking demand signal received by the trailer ECU 18 via the pneumatic line 34.

The provision of such a headboard pressure sensor 36 is particularly advantageous because the braking demand signal can be transmitted very quickly to the trailer ECU 18 via the second CAN bus 20b, and without the need to provide any additional wiring. This overcomes the problem of delay in operation of the trailer brakes caused by the length of time the pneumatic braking demand signal takes to travel along the pneumatic line 34 to the trailer ECU 18, particular if the trailer 14 is extended by any significant degree.

It will be appreciated that the invention may equally be applied to other configurations of electrical braking system. For example, each modulator 32 may be connected to a single brake actuator 30, or to all the brake actuators 30 acting on the wheels on one axle of the tractor 12 or trailer 14. Advantageously, as is conventional in most, if not all, vehicles fitted with EBS, the ECUs 16, 18 are each connected to at least one wheel speed sensor and are also able to provide anti-lock braking control, i.e. to provide ABS functionality.

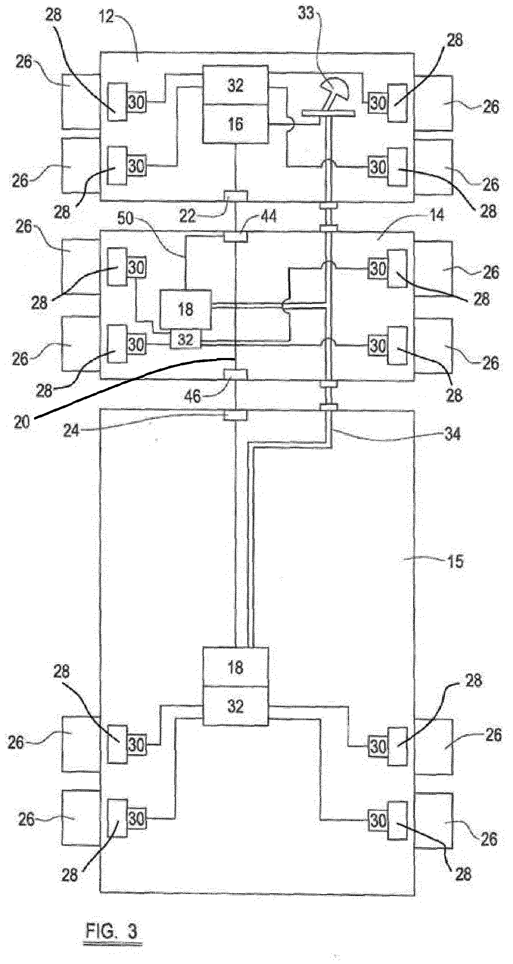

Embodiments of the invention may be used for tractor and full trailer or tractor and semi-trailer combinations. ISO11992 allows for a tractor and up to five trailers to be connected together. Figure 3 shows a tractor and two trailers connected together.

Referring to Figure 3, there is shown a tractor 12, a first 'predecessor' trailer 14 and a second 'successor' trailer 15. It will be understood that since up to five trailers may be provided, in accordance with ISO11992, the or each trailer is the successor to the trailer (or tractor in the case of a single trailer) ahead of it, and each trailer having a trailer behind it is the predecessor to the trailer behind it. The predecessor to the first trailer 14 is the tractor 12 (the tractor 12 cannot be a successor because it is always the first unit in a train). In a tractor and semi-trailer combination, if the tractor is not configured correctly to support a semi-trailer, a dolly may be provided between the tractor and the semi-trailer - the dolly supporting the semi-trailer and being towed by the tractor. In this case, the system may be configured as shown in Figure 3, with the dolly corresponding to the first trailer 14.

The tractor 12 and each trailer 14, 15 is provided with an electrical braking control unit 16, 18, a modulator 32 and a brake 28, and a brake actuator 30 associated with each wheel 26. A brake pedal 33, positioned in a driver's cab of the tractor 12, is connected to the tractor ECU 16 and is operable to transmit to the tractor ECU 16 an electrical braking demand signal which is used to generate a braking signal which is transmitted to the modulators 32.

The tractor ECU 16 is connected to each of the trailer ECUs 18 using a CAN bus 20, so that the electrical braking demand signal can be transmitted to the trailer ECUs 18. In order to facilitate this connection there is an ISO 7638 compliant connector 22 provided at the rear of the tractor 12, a CAN hub 44 at the front of the first trailer 14, a further ISO 7638 compliant connector 46 at the rear of the first trailer 14 and a further ISO 7638 compliant connector 24 provided at the front of the second trailer 15. The CAN bus 20 extends from the tractor mounted connector 22 to the CAN hub 44, on to the rear connector 46 of the first trailer 14, the front (headboard) connector 24 of the second trailer, and finally the second trailer electrical control unit 18. In such an embodiment, or where further trailers are provided, the CAN hub 44 acts as a router.

In embodiments, a pneumatic line 34 extends from the brake pedal 33 to each of the trailer ECUs 18, and provides means of communicating a pneumatic braking demand signal to the trailer ECUs 18 as a back-up to the electrical braking demand signal as discussed above.

The CAN bus 20 connecting the CAN hub 44 to the connector 46 at the rear of the first trailer 14 is connected to a first port of the CAN hub 44, and the CAN bus 50 connecting the CAN hub 44 to the first trailer ECU 18 is connected to a second port of the CAN hub 44. By virtue of this arrangement, only a single electrical connection between the tractor 12 and the trailer 14 is required in order to supply electrical power, and perhaps also an electrical braking demand signal to the trailer ECU 18.

The second port of the CAN hub 44 may provide a five pin connection to the first trailer ECU 18, the five pin connection being used to provide electrical power to the trailer ECU 18, and, if desired, ignition on/off and cab-mounted warning lamp signals. In this case, the trailer ECU 18 may be able to provide ABS functionality only and not a full EBS. The second port of the CAN hub 44 may, alternatively provide an ISO7638 standard seven pin connection, in which case, the dolly electrical braking control unit 18 may also be supplied with the electrical braking demand signal via this connection, and can function as an EBS unit. In such an embodiment, CAN hub 44 acts as a router. The first trailer ECU 18 receives all seven cores from the second trailer connector 24, including the ISO 11992 communication part of the electrical control line, provides two intermediate ISO 11992 CAN nodes, connecting the first to the first trailer ECU 18 via a seven-core cable of up to 40 metres in length and the second to the tractor connector 22.

Where the five-pin port of the CAN hub 44 is used, if the dolly 14 is to be provided with EBS, it is necessary for the dolly 14 to receive the pneumatic braking demand signal from the pneumatic line 34, and the trailer ECU 18 to be provided with a pressure transducer to convert the pneumatic signal to an electrical braking demand signal for processing by the trailer ECU 18.

In the Figure 3 arrangement, the second trailer 15 could also be provided with a CAN hub to enable the connection of an additional trailer, i.e. a successor to the second trailer 15. The second trailer 15 (and additional trailers) can also be provided with a headboard pressure sensor as described in relation to Figure 2 above. The pressure sensor may be connected to an auxiliary port on the associated CAN hub 44 instead of the associated ECU 18. This limits the number of long cable runs. The CAN hub 44 uses the intermediate CAN node to send a signal from the pressure sensor when there is no electric control line available on the tractor 12.

Where additional trailers are provided, it will be appreciated that the final trailer in the series will be configured substantially as the second trailer 15 as shown in Figure 3, and each of the other trailers (each being both a predecessor and a successor) will be configured substantially as the first trailer 14 of Figure 3.

The CAN hub 44 may be provided for different situations, for example the configuration of a CAN hub 44 when it is to be used as a repeater may be different from the configuration of a CAN hub 44 when it is used as a router. It is known to use different connector ports for different functions, for example, the CAN hub may have a dedicated connector port for each of a towed/front/predecessor node, local node, towing/rear/successor node and auxiliary node.

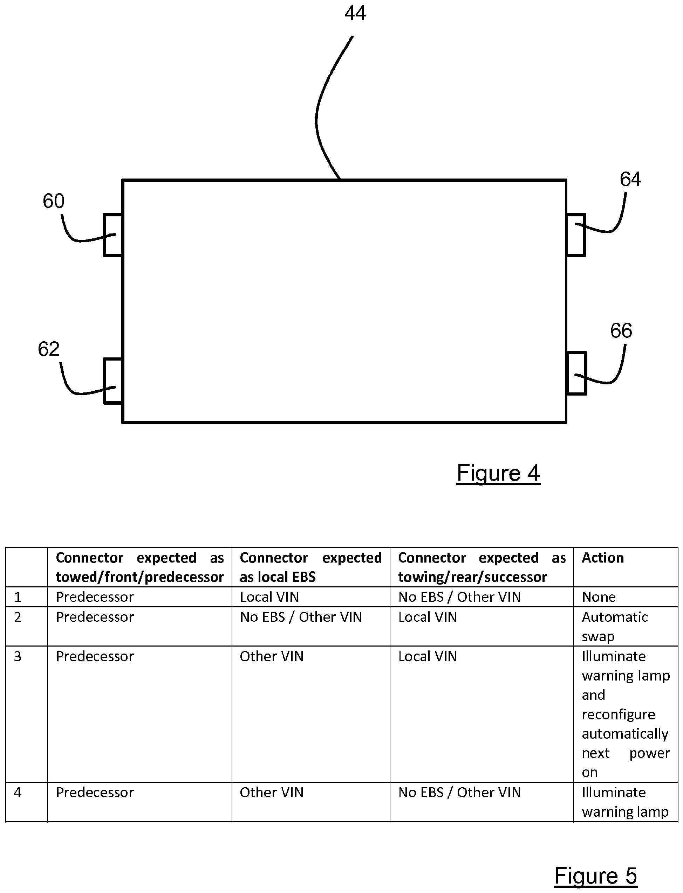

An embodiment of a CAN hub 44 is shown in Figure 4. The CAN hub 44 includes 4 connectors, 60, 62, 64, 66. The functions of the connectors 60, 62, 64, 66 may be as follows. The connector 60 is an auxiliary connection, for example a connector for a pressure transducer, a connector 62 is a front 'predecessor' or 'towed' connector, to connect to a predecessor, which may be the tractor 12, or the trailer ahead of the trailer bearing the CAN hub 44 in question, the connector 64 is a rear, 'successor' or 'towing' connector, for connecting to a rearward 'successor' trailer, and the connector 66 is a local connector, which connects to the ECU 18 on the same trailer as that associated with the CAN hub 44 in question. As mentioned above, in known devices, the functions of the connectors 60-66 are permanently configured and arranged. Furthermore, the pinouts and keying of the connector ports may be identical for each port.

The present invention enables the configuration and/or reconfiguration of at least one of the functions of the hub, i.e. as a repeater, a router for towing trailer or a router for a multiple EBS system, via an automatic or semiautomatic procedure. This means that the CAN hub 25 and the CAN hub 44 can be physically identical to one another, and may be configured and/or reconfigured to adopt its required function, or even to change its function depending upon the configuration of the vehicle. Additionally or alternatively, the allocation of each connector port may also be configured and/or reconfigured automatically or semi-automatically.

An EBS for a trailer is typically connected to a workshop computer (tester) in order to program parameters within the EBS and carry out a functional test. This connection may be made to a dedicated diagnostics port on the EBS. Typically, the connection is made via the ISO7638 connector at the front of the trailer, i.e. the headboard connector 24. The communication is made via the CAN bus 20. Where the trailer is fitted with a CAN hub 25, 44, irrespective of the function of the CAN hub 25, 44, it is still possible to perform this 'end-of-line' procedure via the connector 24, where provided. The CAN hub 25, 44 facilitates this by passing on messages intended for the trailer EBS (rearwards) or for the tester (forwards). Thus, the tester is able to communicate with the CAN hub 25, 44 directly.

It is also possible for the CAN hub 25, 44 to make inferences about the desired/required function of each of the connector ports. Such inferences may be made automatically. It is also possible to use any of the connectors for any function.

In an embodiment, the tester initiates an 'end-of-line' mode, in other words a 'configuration mode'. The CAN hub 25, 44 recognises the tester port as the 'towed node' and saves this information in memory. The CAN hub 25, 44 may then automatically recognise the connection of one or two electronic braking systems on the other nodes.

Where there are two EBS, then the CAN hub configuration is a 'two EBS router'. The CAN hub 44 saves this information in memory. The vehicle identification number (VIN), which is broadcast on each CAN node by the two EBS is also saved in memory. The VIN is programmed by the tester as part of the end-of-line procedure and subsequently continuously broadcast by the EBS in a running gear equipment (RGE) message, e.g. RGE23, which is a message sent forward in the train by trailer nodes. Local nodes may be identified by the trailer VIN which is broadcast in the RGE message.

Where there is only one EBS then the configuration of the CAN hub 25, 44 is either a 'repeater' or a `towing trailer router'. The node without an EBS connected to it is, by default, a towing node, irrespective of whether or not it is connected to a towing ISO7638 connector. The CAN hub 25, 44 saves this information to memory. The local VIN is also stored in memory.

A brake demand message, for example an EBS11 message, is broadcast rearwards to each trailer in the train, every 10 milliseconds. The brake demand message can be used to identify `predecessor nodes', i.e. the tractor/trailer ahead of the trailer receiving the brake demand message. Local nodes are identified by a recognised trailer VIN broadcast in an RGE message, e.g. RGE 23.

'Successor nodes' may be identified either by a 'no reception' message, i.e. nothing is identified as being connected to the connector, or an unknown trailer VIN being broadcast in the RGE23 message.

It is possible for the CAN bus 20 to be used to reconfigure the system, in service, for example following maintenance. As mentioned above, there is a risk that even in systems where permanent labels are provided adjacent connectors, that cables may be connected to the wrong connector after disconnection. The present invention makes it possible to detect such errors and to correctly re-configure any wrongly connected connectors. Additionally or alternatively, a signal may be provided to a driver that there are wrongly connected connectors. Such a signal may be provided by lighting a warning lamp in the driver's cab, which may be performed by the hub 25, 44, for example by connecting pin 5 of the ISO7638 to ground. It is also possible for the hub to light a warning lamp via the ISO11992 CAN bus.

A table of possible errors and error actions (to reconfigure the CAN hub 25, 44) is provided in Figure 5. In the event that all the connections are as expected (line 1 of the table), then no reconfiguration is required.

In the event that the local connection 66 and the towing/successor/rear connection 64 have been switched (line 2), then the CAN hub 25, 44 automatically switches the functions of these two connectors, so that the EBS can function correctly, despite an error having been made during reconnection of the cables to connectors 64 and 66. The cables do not have to be disconnected and reconnected.

In the event that an unrecognised/unexpected VIN is received at the local connection 66, and the local VIN is received at the towing/successor/rear connection 66 (line 3), this indicates that an incorrect trailer has been connected as the successor. In this event, a warning signal is sent to the driver's cab. The next time that the system is powered on, an automatic reconfiguration is carried out, so that the new VIN is recognised and accepted.

In the event that the local connection receives an unrecognised VIN and the towing/successor/rear connection receives either no VIN or an unrecognised/unexpected VIN (line 4), then a warning signal is sent to the driver's cab, and manual intervention is required. This indicates that an unexpected or unrecognised trailer has been connected to the local connector, and the local connection which was expected is missing.

In the event that the local connection 66 and the front/towed/predecessor connection 62 are switched (line 5), then an automatic reconfiguration of those connectors 62, 66 is carried out, so that the CAN hub 44 is reconfigured for use in its present arrangement and no manual replacement of the cables is required for the EBS to function correctly.

Since the CAN hub 25, 44 is able to configure itself as either a repeater or a router, dependent upon the configuration of the vehicle, it is possible for each trailer to be provided with a CAN hub 25, 44, and it is not necessary to replace the device if the vehicle configuration is changed. The CAN hub 25, 44 may automatically configure itself to perform the function that is required of it, dependent upon the signals it receives from its local ECU 18 (i.e. the ECU associated with the trailer 14 with which the CAN hub 25, 44 is associated) and the ECU 16, 18 of the predecessor (i.e. the tractor ECU or the ECU of the trailer 14 ahead of the associated trailer) and/or the ECU of a successor 14, 15 (where present).

It is also possible to completely reconfigure the hub 25, 44 by running a new end-of-line procedure, in the event that automatic reconfiguration is not possible, or is unsuccessful.

By continually (i.e. frequently, not necessarily continuously) assessing the signals received by each node of the or each CAN hub 25, 44, it is possible to reconfigure all possible errors, apart from the loss of the CAN hub's local VIN.

Whilst the connectors described above are ISO7638 compliant, it should be appreciated that this is not essential to the invention, and any other type of connector capable of relaying the required signals may be used.

It will be appreciated that whilst each CAN hub 25, 44 has been described as being mounted upon the trailer 14 with which it is associated, this is not necessary for the invention.

When used in this specification and claims, the terms "comprises" and "comprising" and variations thereof mean that the specified features, steps or integers are included. The terms are not to be interpreted to exclude the presence of other features, steps or components.

## Claims

1. A hub device (25, 44) for use in a vehicle braking system which includes an electronic braking system and a CAN bus (20, 20a, 20b), **characterised in that** the hub device (25, 44) is operable to communicate electrical signals, including a braking demand signal, to components of the electronic braking system, and to function as either a CAN bus repeater or a CAN bus router, and is operable to determine its required function as either a CAN bus repeater or a CAN bus router based upon signals received by the hub device (25, 44) from the electronic control unit (18) of a trailer (14, 15) with which the hub device (25, 44) is associated, and one or more electronic control units (16, 18) associated with a tractor (12) of the vehicle (10) and/or one or more other trailers (14, 15), where one or more additional trailers (15) is provided.

2. A hub device (25, 44) according to claim 1 including a plurality of connectors (60, 62, 64, 66), the hub device (25, 44) being operable to configure a function of one or more of the connectors (60, 62, 64, 66) based upon a signal received by or the lack of a signal received by one or more of the connectors (60, 62, 64, 66).

3. A vehicle braking system for a vehicle (10) including a tractor (12) and at least one trailer (14, 15), the vehicle braking system including an electronic braking system including a respective electronic control unit (16, 18) for the tractor (12) and the or each trailer (14, 15), a CAN bus (20, 20a, 20b) to enable communication between the electronic control units (16, 18) of the tractor (12) and the or each trailer (14, 15), and a hub device (25, 44) according to claim 1 or claim 2.

4. A vehicle braking system according to claim 3, as dependent on claim 2 wherein the hub device (25, 44) is operable to configure its connectors (60, 62, 64, 66) during an end-of-line procedure.

5. A vehicle braking system according to claim 3 as dependent on claim 2 wherein the hub device (25, 44) is operable to configure its connectors (60, 62, 64, 66) during operation of the braking system, and/or during or after maintenance of the braking system.

6. A vehicle braking system according to any of claims 3 to 5, wherein each trailer (14) of the vehicle (10) includes an associated hub device (25, 44).

7. A vehicle braking system according to any of claims 3 to 5 wherein each trailer (14) except the final trailer (15) in a train includes a hub device (25, 44).

8. A vehicle braking system according to any of claims 3 to 7, including a plurality of hub devices (25, 44), wherein communication between the electronic control units (16, 18) of the tractor (12) and/or the or each trailer (14, 15), is carried out via one or more of the hub devices (25, 44).

9. A vehicle (10) including a braking system according to any of claims 3 to 8.

10. A vehicle (10) including a hub device (25, 44) according to claim 1 or claim 2.

## Patentansprüche

1. Hub-Bauelement (25, 44) zur Verwendung im Bremssystem eines Fahrzeugs, welche ein elektronisches Bremssystem und einen CAN-Bus (20, 20a, 20b) einschließt, **dadurch gekennzeichnet, dass** das Hub-Bauelement (25, 44) betreibbar ist, elektrische Signale, einschließlich ein Signal für Bremsanforderung, an Komponenten des elektronischen Bremssystems zu kommunizieren, und um entweder als ein CAN-Bus-Repeater oder ein CAN-Bus-Router zu fungieren, und betreibbar ist, seine erforderliche Funktion als entweder ein CAN-Bus-Repeater oder ein CAN-Bus-Router auf Basis von Signalen zu bestimmen, welche das Hub-Bauelement (25, 44) von der elektronischen Steuereinheit (18) eines Anhängers (14, 15) empfängt, mit welcher das Hub-Bauelement (25, 44) verbunden ist, und eine oder mehrere elektronische Steuereinheiten (16, 18), die mit einem Traktor (12) des Fahrzeugs (10) und/oder einem oder mehreren anderen Anhängern (14, 15) verbunden sind, wo ein oder mehrere zusätzlichen Anhänger (15) bereitgestellt sind.

2. Hub-Bauelement (25, 44) nach Anspruch 1, das eine Vielzahl von Verbindern (60, 62, 64, 66) einschließt, wobei das Hub-Bauelement (25, 44) betreibbar ist, eine Funktion des einen oder der mehreren Verbinder (60, 62, 64, 66) auf Basis eines Signals oder des Fehlens eines Signals, das vom einen oder mehreren der Verbinder (60, 62, 64, 66) empfangen wurde, zu konfigurieren.

3. Fahrzeugbremssystem für ein Fahrzeug (10), das eine Zugmaschine (12) und wenigstens einen Anhänger (14, 15) einschließt, wobei das Fahrzeugbremssystem ein elektronisches Bremssystem einschließt, das eine jeweilige elektronische Steuereinheit (16, 18) für die Zugmaschine (12) und den oder jeden Anhänger (14, 15), einen CAN-Bus (20, 20a, 20b) einschließt, um Kommunikation zwischen den elektronischen Steuereinheiten (16, 18) der Zugmaschine (12) und dem oder jedem Anhänger (14, 15) und ein Hub-Bauelement (25, 44) nach Anspruch 1 oder Anspruch 2 zu ermöglichen.

4. Fahrzeugbremssystem nach Anspruch 3, wie von Anspruch 2 abhängig, wobei das Hub-Bauelement (25, 44) betreibbar ist, seine Verbinder (60, 62, 64, 66) während einer Zeilenendprozedur zu konfigurieren.

5. Fahrzeugbremssystem nach Anspruch 3 wie von Anspruch 2 abhängig, wobei das Hub-Bauelement (25, 44) betreibbar ist, seine Verbinder (60, 62, 64, 66) während des Betriebs des Bremssystems und/oder während oder nach Wartung des Bremssystems zu konfigurieren.

6. Fahrzeugbremssystem nach irgendeinem der Ansprüche 3 bis 5, wobei jeder Anhänger (14) des Fahrzeugs (10) ein zugehöriges Hub-Bauelement (25, 44) einschließt.

7. Fahrzeugbremssystem nach irgendeinem der Ansprüche 3 bis 5, wobei jeder Anhänger (14), außer dem Anhänger (15), in einem Zug ein Hub-Bauelement (25, 44) einschließt.

8. Fahrzeugbremssystem nach irgendeinem der Ansprüche 3 bis 7, einschließlich einer Vielzahl von Hub-Bauelementen (25, 44), wobei Kommunikation zwischen den elektronischen Steuereinheiten (16, 18) der Zugmaschine (12) und/oder jedem Anhänger (14, 15) über ein oder mehrere der Hub-Bauelemente (25, 44) ausgeführt wird.

9. Fahrzeug (10), das ein Bremssystem nach irgendeinem der Ansprüche 3 bis 8 einschließt.

10. Fahrzeug (10), das ein Hub-Bauelement (25, 44) nach Anspruch 1 oder Anspruch 2 einschließt.

## Revendications

1. Dispositif concentrateur (25, 44) destiné à être exploité dans un système de freinage pour un véhicule qui comprend un système de freinage électronique et un bus CAN (20, 20a, 20b), **caractérisé en ce que** le dispositif concentrateur (25, 44) peut être utilisé pour communiquer des signaux électriques, dont un signal de demande de freinage, à des composants du système de freinage électronique, et pour fonctionner comme soit un répéteur de bus CAN, soit un routeur de bus CAN, et pouvant être utilisé pour déterminer sa fonction requise comme soit un répéteur de bus CAN, soit un routeur de bus CAN, sur la base des signaux reçus par le dispositif concentrateur (25, 44) en provenance de l'unité de commande électronique (18), d'une remorque (14, 15) à laquelle le dispositif concentrateur (25, 44) est associé, et en provenance d'une ou de plusieurs unités de commande électroniques (16, 18) associées à un tracteur (12) du véhicule (10) et/ou à une ou plusieurs autres remorques (14, 15), en présence éventuelle d'une ou de plusieurs remorques supplémentaires (15).

2. Dispositif concentrateur (24, 44) selon la revendication 1, comprenant une pluralité de connecteurs (60, 62, 64, 66), le dispositif concentrateur (25, 44) pouvant être utilisé pour configurer une fonction d'un ou de plusieurs des connecteurs (60, 62, 64, 66) sur la base d'une réception ou d'un manque de réception d'un signal par l'un ou plusieurs des connecteurs (60, 62, 64, 66).

3. Système de freinage pour un véhicule (10) comprenant un tracteur (12) et au moins une remorque (14, 15), le système de freinage pour un véhicule comportant un système de freinage électronique doté d'une unité de commande électronique respective (16, 18) pour le tracteur (12) et pour la ou pour chaque remorque (14, 15), un bus CAN (20, 20a, 20b) pour assurer la communication entre les unités de commande électroniques (16, 18) du tracteur (12) et de la ou de chaque remorque (14, 15), et un dispositif concentrateur (25, 44) selon soit la revendication 1, soit la revendication 2.

4. Système de freinage pour un véhicule selon la revendication 3, telle que relevant de la revendication 2 dans lequel le dispositif concentrateur (25, 44) peut être utilisé pour configurer ses connecteurs (60, 62, 64, 66) au cours d'une procédure de fin de ligne.

5. Système de freinage pour un véhicule selon la revendication 3, telle que relevant de la revendication 2 dans lequel le dispositif concentrateur (25, 44) peut être utilisé pour configurer ses connecteurs (60, 62, 64, 66) au cours d'une exploitation du système de freinage, et/ou pendant ou après une intervention de maintenance du système de freinage.

6. Système de freinage pour un véhicule selon l'une quelconque des revendications 3 à 5, dans lequel chaque remorque (14) du véhicule (10) comprend un dispositif concentrateur associé (25, 44).

7. Système de freinage pour un véhicule selon l'une quelconque des revendications 3 à 5, dans lequel chaque remorque (14) à l'exception de la remorque finale (15) dans un train comprend un dispositif concentrateur (25, 44).

8. Système de freinage pour un véhicule selon l'une quelconque des revendications 3 à 7, comprenant une pluralité de dispositifs concentrateurs (25, 44), dans lequel la communication entre les unités de commande électroniques (16, 18) du tracteur (12) et/ou de la ou de chaque remorque (14,15) est assurée moyennant un ou plusieurs des dispositifs concentrateurs (23, 44).

9. Véhicule (10) comprenant un système de freinage selon l'une quelconque des revendications 3 à 8.

10. Véhicule (10) comprenant un dispositif concentrateur (25, 44) selon soit la revendication 1, soit la revendication 2.
